# EUROPEAN PATENT APPLICATION

(11) **EP 4 745 567 A1**
(43) Date of publication of application: **20.05.2026**
(21) Application number: 24213113.4
(22) Date of filing: 14.11.2024
(51) Int. Cl.: G01N 29/06, G01Q 60/38, G01Q 70/00

(54) **AN ULTRASOUND ACOUSTIC MICROSCOPY SYSTEM, AND A METHOD OF OPERATING THEREOF**

(71) Applicant: Nederlandse Organisatie voor toegepast- natuurwetenschappelijk onderzoek TNO, 2595 DA 's-Gravenhage (NL)
(72) Inventor: QUESSON, Benoit André Jacques, 2595 DA 's-Gravenhage (NL); VAN NEER, Paul Louis Maria Joseph, 2595 DA 's-Gravenhage (NL); REYES HERNANDEZ, Juan Xavier, 2595 DA 's-Gravenhage (NL); WINTERS, Jasper, 2595 DA 's-Gravenhage (NL); VAN ES, Marteen Hubertus, 2595 DA 's-Gravenhage (NL); VAN WILLIGEN, Douwe Manuel, 2595 DA 's-Gravenhage (NL)
(74) Representative: V.O.

(57) **Abstract**

The invention relates to a method and system for operating an ultrasound acoustic microscopy system equipped with a probe tip. The method involves determining the condition of the probe tip during and/or between ultrasound acoustic microscopy measurements and, if necessary, selectively conditioning the tip using an integrated tip conditioning unit. The conditioning process helps maintain or enhance the target performance characteristics of the probe tip, ensuring optimal imaging quality. The system comprises a probe tip for contacting a sample, an ultrasound generator for emitting acoustic signals, a detector for detecting echoes, and an evaluation module for assessing the tip's condition. The control system activates the tip conditioning unit selectively to ensure consistent imaging performance.

## Description

### FIELD OF THE INVENTION

The invention relates to a method for operating an ultrasound acoustic microscopy system equipped with a probe tip. The invention also relates to an ultrasound acoustic microscope system. Also, the invention relates to methods and systems for performing acoustic microscopy techniques at gigahertz (GHz) frequencies, specifically designed to probe deeper into semiconductor materials with greater resolution and without the reliance on liquid coupling mediums. Furthermore, the invention relates to inspection of semiconductor devices where traditional optical and lower-frequency acoustic methods due to their inability to effectively detect and characterize sub-surface defects and features at nanometer-scale resolutions, e.g. at depths exceeding 1 µm and/or below or in optically opaque materials. Additionally, the invention relates to a Half-Wavelength Contact Acoustic Microscopy (HaWaCAM) and a method of operating thereof.

### BACKGROUND TO THE INVENTION

The semiconductor industry has been driven by the need for increasingly sophisticated metrology tools to accommodate the rapid advancements, particularly in the context of 3D stacking and integration of diverse materials. As transistor densities increase and layers become more complex, traditional optical metrology methods have struggled to provide accurate and reliable measurements. This is largely due to their inability to effectively penetrate optically opaque layers, such as those composed of various metals and other materials that obstruct optical wavelengths.

Acoustic microscopy, which utilizes acoustic waves to probe materials, has emerged as an alternative to overcome the limitations of optical metrology. Acoustic waves, with their ability to penetrate deeper into materials, offer significant advantages for example in semiconductor inspection. However, traditional acoustic microscopy systems, often operating at frequencies up to 1 GHz, are restricted in their resolution and depth capabilities, typically achieving a resolution of 3 micrometers in materials like polymethyl methacrylate (PMMA) and 6 micrometers in silicon oxide. This level of resolution may be insufficient for detecting the smaller, nanometer-scale defects that are critical in modern semiconductor devices.

Traditional acoustic microscopy systems often employ a piezoelectric transducer and an acoustical lens with a water coupling layer. The presence of a water coupling layer in traditional acoustic microscopy introduces additional complications. This layer can cause significant attenuation of acoustic signals, sometimes up to 44 decibels, thereby severely limiting the system's effectiveness in penetrating deeper layers and detecting finer structural details within the samples (e.g. semiconductor substrates). The attenuation not only reduces the sensitivity and accuracy of measurements but also impedes the efficiency of the metrology process, making it less suitable for high-resolution requirements.

In addition to these challenges, the probe tips used in acoustic metrology systems are subject to wear and contamination during the measurement process. In contact-based methods, such as Atomic Force Microscopy (AFM), where a probe tip is brought into physical contact with the sample, tip wear due to friction is a well-known issue. However, the tip geometry and the forces applied in conventional AFM systems are substantially different from those used in acoustic metrology systems such as Half-Wavelength Contact Acoustic Microscopy (HaWaCAM). The larger tip sizes and higher forces applied in HaWaCAM result in a higher likelihood of tip damage, wear, and debris accumulation, which can degrade measurement accuracy and increase the frequency of costly probe replacements.

Addressing these issues in acoustic microscopy, for example in high-frequency systems (such as HaWaCAM systems), requires a method to manage probe tip wear. Probe tip wear can influence the contact with the sample, and hence introduce variability in the measurement quality, it can further lead to debris generation and hence contamination. There is a need to effectively maintain probe tip integrity, particularly for systems that employ larger, heavier probe tips designed to provide deeper penetration and higher resolution (cf. HaWaCAM). The existing solutions fail to adequately address the unique challenges posed by the combination of tip size, applied forces, and contact area required for effective acoustic microscopy for instance at GHz frequencies.

Therefore, there remains a need for novel methods and systems to manage tip wear and debris accumulation in high-frequency acoustic metrology systems, in order to maintain consistent imaging quality, prolong probe tip lifespan, and reduce the downtime and costs associated with frequent tip replacement and recalibration.

### SUMMARY OF THE INVENTION

It is an object of the invention to provide for a method and a system that obviates at least one of the above-mentioned drawbacks.

Additionally or alternatively, it is an object of the invention to improve the operation of an ultrasound acoustic microscopy systems.

Additionally or alternatively, it is an object of the invention to improve the durability and longevity of metrology probe tips reducing the need for frequent replacements.

Additionally or alternatively, it is an object of the invention to provide for an acoustic microscopy system with enhanced performance throughout its lifecycle.

Additionally or alternatively, it is an object of the invention to improve the operation of high frequency acoustic microscopy systems with larger and/or heavier probe tips compared to probes employed in traditional atomic force microscopy systems.

Thereto, the invention provides for a method for operating an ultrasound acoustic microscopy system equipped with a probe tip, wherein the probe tip is configured to be placeable in contact with a sample to emit an ultrasound acoustic signal into the sample for performing ultrasound acoustic microscopy measurement, wherein the method comprises determining information about a condition of the probe tip, and selectively conditioning the probe tip with a tip conditioning unit of the ultrasound acoustic microscopy measurement system, if the determined information about the condition of the probe tip indicates a need, to maintain or enhance a target characteristic of the probe tip, wherein the conditioning is performed selectively at one or more instances during and/or between ultrasound acoustic microscopy measurements.

An improved Ultrasound Acoustic Microscopy (UAM) system is provided that enhances the functionality and lifespan of the probe tip through condition assessment and selective conditioning processes. A high precision in semiconductor metrology for example can be obtained, where accurate imaging of densely packed, multi-layered structures can be important.

The tip conditioning unit (TCU) can be integrated within the UAM system. An evaluation module of the UAM system may continually or periodically assesses the condition of the probe tip during scanning operations. This assessment can be done in various ways.

Based on the assessment, the system decides when the probe tip may require conditioning to maintain or restore its targeted characteristics, such as geometric shape and surface integrity. This responsive mechanism ensures that the probe tip is maintained at targeted conditions, minimizing errors in data due to wear or contamination.

As component layers become increasingly compact and materials become more diverse and challenging to penetrate optically, the need for accurate and reliable UAM can be important. By maintaining an optimal probe tip condition, the resolution and precision of acoustic imaging can be ensured, facilitating the detection of nanoscale defects deep within complex semiconductor structures.

Minimized downtime for maintenance and the ability to condition the probe tip without halting measurements streamline operations, boosting throughput.

By extending the lifespan of the probe tips through efficient conditioning and protective measures, the overall operational costs related to probe tip replacement and system downtime are significantly reduced.

Optionally, the ultrasound acoustic signal comprises a high-frequency acoustic component with a frequency of at least 1 GHz.

Optionally, echoes from the tip, tip end and/or sample are received to extract relevant information about the condition (e.g. geometrical shape) of the tip. Conditioning of the probe tip by the tip conditioning unit may be performed selectively based on the determined information.

Optionally, a performance of the probe tip is evaluated based on the acquired data or predefined criteria to determine a need for conditioning the probe tip.

Optionally, a need for conditioning the probe tip is evaluated based on a detection and/or determination of degradation of the probe tip.

Optionally, the probe tip is conditioned with a tip conditioning unit integrated within the system.

Optionally, the ultrasound acoustic microscopy system is configured to be switchable between a probing state, in which the probe tip is used for sensing, and a conditioning state, in which the probe tip is reconditioned.

A dual-state functionality is integrated into the UAM system. During the probing state, the system may focus on measurement, thus ensuring that the data collection process is uninterrupted and maintains high fidelity. Switching to the conditioning state may occur only when necessary, either at predetermined intervals based on typical wear patterns and/or when sensor data from the ultrasound echoes suggest that the tip's performance can be compromised.

Regular and timely conditioning may ensure that the tip maintains its structural integrity and functional characteristics. Frequent replacement of probe tips due to wear and tear is costly and time-consuming. The system's ability to condition the probe tip on-the-fly, as soon as degradation is detected or anticipated, effectively extends its usable lifetime. This conditioning may involve mechanical abrasion to reshape the tip, application of protective or functional coatings (cf. (re)coating), and/or cleaning off accumulated debris which can interfere with signal clarity.

Optionally, the condition of the probe tip is determined based on ultrasound echo measurements.

The operational state of the probe tip in an UAM system is an important variable that can directly influence the quality and accuracy of imaging outcomes. Given the demanding environments and frequent usage patterns associated with these systems for example in semiconductor metrology and similar applications, the probe tip may be subjected to significant wear and potential deformation. This degradation can lead to a diminished capability to effectively emit and receive ultrasound signals, it can also lead to deformation of the emit and receive ultrasound signals, which in turn compromises the resolution and fidelity of the resultant acoustic images.

By adopting ultrasound echo measurements as a basis for assessing the condition of the probe tip, the system leverages its native ultrasonic capabilities to detect and interpret variations in echo patterns that are indicative of problems at the tip, such as dulled edges or accumulation of debris. These measurements provide a detailed echo response received from the interaction between the probe tip and the sample or a standardized testing interface. Variances from expected echo patterns, such as changes in amplitude, time delay, or spectral characteristics, can signal alterations in the probe tip's geometry or surface condition that necessitate conditioning interventions.

By combining the metrological and maintenance capabilities within the same unit, the system can reduce the logistical overhead associated with separate maintenance setups. Moreover, this integrated approach allows for real-time adjustments to the probe tip based on immediate feedback from the measurement data and predictive analytics, ensuring optimal performance at all times.

Utilizing the echo response not only streamlines the operational protocol by using the inherent functionalities of the ultrasound system but also prevents the need for external measurement devices or sensors, which may introduce complexity or potential points of failure. By negating the requirement for additional diagnostic instruments, the system remains less complex and more robust, lowering both initial setup costs and maintenance demands.

The capability to continually or periodically monitor the condition of the probe tip using ultrasound echo measurements enables real-time diagnostics. This immediacy allows for prompt decisions regarding the need for conditioning, ensuring that the tip is always maintained at optimum functionality.

Ultrasound echoes provide precise data reflective of microscale changes in the physical structure of the tip. Because these measurements are derived from the primary functional activity of the probe (emitting and receiving ultrasound waves), they are inherently reliable and tuned to the important aspects of probe function.

The echo measurement-based diagnostics can be integrated into a feedback loop that autonomously guides the conditioning process. This loop allows the system to self-adjust and perform maintenance activities such as reshaping or cleaning the probe tip, based on known (e.g. empirical) data directly linked to performance outcomes.

By ensuring that conditioning is only performed when necessary, based on specific diagnostic readings rather than a preset schedule, the actual physical integrity and functional sharpness of the probe tip are preserved.

The system can adapt its maintenance schedule based on the actual wear and tear experienced by the probe tip, which can vary significantly based on usage intensity and the nature of the sampled materials.

The quality of the ultrasound acoustic microscopy may be significantly dependent on the shape and condition of the probe tip. The target shape of the tip is important for adequate contact with the sample and effective transmission of acoustic signals. Maintaining this shape can be important for the system's functionality, influencing the resolution and accuracy of the acoustic imaging process.

In some examples, a quality estimation of the probe tip may be done using one or more measurements. In some examples, this is performed without sample contact. In some advantageous embodiments, the estimation processes may be implemented when the probe tip is positioned in air, ideally between measurement points. This approach ensures that the probe tip's condition can be assessed without the interference of sample properties, thereby eliminating any biases or errors that might arise from variations in sample materials or conditions. This non-contact method of calibration allows for a more consistent and reliable evaluation of the probe tip's condition, facilitating timely interventions for reconditioning while also ensuring high accuracy and precision in the acoustic microscopy measurements.

Optionally, the tip shape is measured optically.

In some examples, white light interferometry is used involving employing coherent light to create an interference pattern, which is then analyzed to determine the topography of the probe tip. The high resolution of white light interferometry allows for detailed surface characterization, providing precise measurements of the tip's wear, shape and/or geometrical configuration.

In some examples, the tip shape is measured using scanning probe microscopy (SPM). In this approach, the acoustic probe tip is brought into contact with a precisely defined sharp tip or structure. The interaction between the probe tip and this reference structure is analyzed, providing feedback on the probe tip's condition and shape. This method is particularly effective in detecting minute deformations or wear that may not be visible through other techniques.

By incorporating sensors or imaging systems capable of performing these measurements within the microscopy setup, the system can continuously monitor the tip's shape and condition. This continuous monitoring allows for the immediate detection of deviations from the desired tip shape, triggering the conditioning process as necessary.

Optionally, the selective conditioning of the probe tip is performed at preset intervals corresponding to predetermined wear patterns of the probe tip, regardless of direct determination of the probe tip's condition at each interval.

In some examples, a blind reconditioning of the probe tip is performed that leverages pre-established protocols to condition the probe tip at fixed intervals, utilizing a predetermined understanding of the tip's wear pattern and the optimal target shape or curve of the tip. This procedure, may not necessitate real-time pulse-echo measurements for each conditioning operation. Instead, the reconditioning process can be systematically scheduled based on the historical wear data and estimated usage, ensuring that the probe tip maintains its necessary operational characteristics over extended periods of use, thereby potentially extending the tip's useful life and reducing the need for frequent manual recalibrations.

In some examples, initially, data is accumulated on the wear and tear of the probe tip over multiple cycles of use. This may include assessing the duration and intensity of the usage that lead to specific wear patterns. Based on the collected empirical data, the system can develop a schedule for conditioning the probe tip. This schedule may for example be configured to anticipate wear before it affects the quality of ultrasounds and measurements. Each interval correlates with the common degradation timeline specific to the type of samples being analyzed or the operational intensity.

By configuring the ultrasound acoustic microscopy system to automatically condition the probe tip at these predetermined intervals, the system can effectively ensure minimal disruption to ongoing operations. This means that the system can continue to operate normally without the need for operators to manually check and evaluate the probe tip's condition continually.

It will be appreciated that although the initial intervals may be preset, the system may include mechanisms for continual feedback based on actual tip condition assessed through echo measurements and acoustical feedback analysis. This real-time data may allow the system to adjust the preset intervals more accurately over time, refining the maintenance schedule based on actual conditions rather than solely on historical/empirical data.

In some examples, integrating predictive maintenance algorithms can further enhance this approach. By using machine learning models that analyze historical and real-time data, the system can predict future wear more accurately and schedule conditioning just in time before significant degradation occurs.

The system can tailor the maintenance schedule according to different operational settings or specific needs, making it adaptable across various types of ultrasound acoustic microscopy tasks.

Optionally, a calibration process is performed in which one or more values indicative of one or more dimensions of the probe tip are determined in order to change one or more operational setting based thereon. The calibration can ensure optimal performance and accurate results in metrology. These methods may involve precise measurements of critical dimensions and properties of the probe tip as well as the adjustment of system settings based on these measurements to maximize the effectiveness and accuracy of the ultrasound acoustic signal emission and echo detection.

The dimensional characteristics of the probe tip, such as its radius, length, and shape, can be measured using various techniques. The measurements obtained are used to verify that the probe tip maintains the required geometric form. Based on the measured dimensions of the probe tip and the acoustic properties of the sample, the settings of the ultrasound generator are fine-tuned. This includes adjusting the frequency, amplitude, and pulse duration of the ultrasound signals to match the acoustic impedance and structural characteristics of the sample. Optimizing these parameters can be important for enhancing the penetration depth and resolution of the imaging.

The sensitivity of the echo detection system may be calibrated to ensure that it is capable of accurately capturing the ultrasound echoes reflecting from various depths and interfaces within the sample. Adjustments can be made to the gain and filtering settings of the detector to optimize the signal-to-noise ratio and to discriminate between relevant signals and background noise.

Real-time feedback from the ultrasound echoes may be used to adjusts the probe tip condition and the ultrasound generator settings. This dynamic calibration approach helps in maintaining optimal contact between the probe tip and the sample and adjusting for any changes in the sample's acoustic properties during scanning.

Optionally, the conditioning of the probe tip involves reshaping the probe tip.

The selective conditioning of the probe tip, particularly through reshaping, may play an important role in maintaining the operational integrity and efficiency of the system. This conditioning strategy ensures that the geometric profile of the probe tip can remain consistent or withing targeted ranges, which may be a prerequisite for achieving high-resolution imaging.

The reshaping process can address deformations and wear that accumulate on the probe tip as a result of continuous contact and friction inherent in scanning operations. These deformations, if left unaddressed, can lead to a degradation in the quality of the acoustic microscopy, as the precision of the acoustic signal emission and reception depends heavily on the shape and condition of the probe tip. By implementing a reshaping strategy, the system can restore the tip to its adequate geometric configuration.

The specific shape of the probe tip can be directly linked to the system's effectiveness in channeling ultrasound waves into the sample and receiving them back without significant loss of information. A misshapen tip can alter the path and intensity of the ultrasound waves, leading to inaccurate images or interpretations. Reshaping can ensure that the acoustic properties of the tip are maintained, leading to better-controlled wave propagation into the sample and more reliable echo detection.

Consistently reshaping the probe tip to correct wear and damage can also ensure uniform performance across multiple measurements. Furthermore, by maintaining the shape of the probe tip, the system can minimizes the risk of damaging the samples, which may occur due to uneven or excessive contact pressure from a damaged or deformed tip.

By having an evaluation module assess when the tip's condition deviates from its ideal state, the system can proactively reshape the tip without awaiting visible failures or noticeable decreases in image quality, thereby preserving the integrity of ongoing operations and ensuring continuity in quality.

Optionally, the conditioning unit is configured to coat the probe tip with a coating layer of coating material, wherein the coating layer is configured to interface with the sample to at least partially shield the probe tip.

The coating layer can be provided to act as a physical barrier between the probe tip and the sample. This separation minimizes direct mechanical interactions and abrasion, significantly reducing wear on the probe tip. By mitigating these wear mechanisms, the system can operate for extended periods without the need for frequent tip replacements or maintenance, lowering operational costs and/or downtime.

Moreover, the coating layer may have tailored acoustic properties to enhance the transmission of ultrasound signals into the sample. Material choices such as polymers can be engineered to have specific impedance profiles that match or complement the sample and probe materials, thus improving signal coupling and reducing reflection losses at the interface.

Additionally or alternatively, coating layers may also be configured to absorb or scatter ultrasonic noise and spurious echoes that may otherwise distort the measurement signal. This damping of unwanted acoustic signals can enhance the received echo patterns, leading to more precise imaging and measurement accuracy.

The coating can be applied in varying thicknesses or in gradients along the probe tip as needed. Such gradients can serve as acoustic attenuation layers that modulate the signal differently at various parts of the probe tip, which can be advantageous for managing multi-modal echoes and reflections within complex sample structures.

The system may have a mechanism for the simple replacement or reapplication of the coating layer. This flexibility allows for the adaptation of the probe tip's properties between different measurement tasks or sample types, offering broader usability without the need to change the physical probe tip.

The coating mechanism can be realized through a variety of methods such as for example, dipping, spraying, electrostatic deposition, vapor deposition, etc., depending on the type of material used for the coating.

The system's control unit can monitor the integrity and thickness of the coating for instance using feedback from acoustic signals. When degradation is detected beyond predetermined thresholds, the system can initiate an automated re-coating procedure.

Based on predictive modeling and historical data, the system can apply different coating profiles tailored to specific measurement requisites or anticipated wear patterns. This proactive approach can preemptively address potential signal quality issues or uneven tip wear.

Optionally, the coating layer is configured to be replaceable, allowing for the removal and reapplication of a new coating layer upon wear or damage.

By allowing for the coating layer to be replaceable, the system avoids the need for a complete probe tip replacement, which can be costly both in terms of the component itself and the associated downtime required for such a replacement. The ability to re-apply a new one significantly cuts down on these expenses. In some cases, removal may not be necessary prior to reapplication.

The process of replacing the coating layer can be much faster than replacing the entire probe tip. With the coating serving as the primary interface between the probe tip and the sample, the underlying material of the probe tip is shielded from direct contact and potential damage. This barrier extends the physical integrity and operational lifespan of the probe tip itself.

The ability to frequently renew the coating layer ensures that the probe tip continues to meet its performance criteria consistently over time. This can be important for maintaining the accuracy and reliability of the ultrasound acoustic microscopy measurements, as wear and damage to the probe tip can lead to data inconsistencies.

In some examples, the system's evaluation module is configured to assesses the condition of the coating layer during operation. This assessment can be based on criteria such as thickness measurement, acoustic feedback analysis, or visual inspection via an integrated microscopic camera system. Upon detecting that the coating layer has degraded to a point where its effectiveness is compromised, the system can notify operators of the need for a replacement or, in more setups, initiate an automatic replacement process. The replacement process may involve (partially) removing the old coating layer (e.g. mechanically, chemically, etc.), optionally preparing the surface of the probe tip as necessary, and applying a new coating. This process can be facilitated by robotic actuators or other automated systems to minimize manual intervention and error.

This replaceable coating feature can be integrated with other predictive maintenance and automatic calibration technologies. For example, using machine learning algorithms, the system can predict the lifespan of the coating layer based on usage patterns and environmental conditions, scheduling replacements in a proactive manner. Additionally, real-time feedback mechanisms can adjust the application process of the coating to ensure optimal thickness and uniformity based on the current state of the probe tip and past performance data.

Optionally, the conditioning unit is configured to apply a subsequent coating to the probe tip over a previous coating layer, wherein said subsequent coating layer provides additional coating material to restore the probe tip to a desired operational condition after the previous coating layer has degraded.

The application of subsequent coating layers over previous ones is a approach to maintain and enhance the operational characteristics of the probe tip used in the system. This method allows for the restoration of the tip in a gradual manner, without necessitating a full re-coating process after every instance of wear or damage.

As a coating layer degrades due to operational stress (e.g., abrasion, chemical exposure), it can be partially or fully supplemented by an additional layer. This not only replenishes the protective barrier but also reinstates any special acoustic or operational properties provided by the coating.

In some examples, each new coating layer is formulated based on the ongoing assessment of tip performance and/or the specific demands at different stages of the tool's lifecycle.

Different materials or composites may be used for different layers to address specific needs such as better acoustic impedance matching.

Optionally, the coating layer includes a gradient in thickness along the curvature of the probe tip configured to serve as an acoustic attenuation layer such as to reduce spurious echoes from sides of the probe tip during ultrasound propagation.

This enhancement directly addresses one of the common issues in ultrasound imaging, which is the presence of spurious echoes. These unwanted acoustic reflections can originate from the sides of the probe tip, especially when the probe tip dimensions align more closely with the wavelength of the ultrasound signals used. By implementing a gradient in the coating thickness, the system manages the acoustic impedance along the probe tip. This differential impedance helps in controlling the path and characteristics of the ultrasound waves as they interact with the probe structure. Thicker coatings at specific sections of the probe tip can attenuate unwanted side echoes more effectively than uniformly thin coatings. This serves to dampen or even absorb those echoes that do not contribute to the primary imaging data and therefore, can otherwise distort the acoustic image or data collected.

This may be important when examining samples with complex internal structures or varying acoustic properties, as it ensures that the echoes that are measured and analyzed originate predominantly from the targeted interaction between the probe tip and the sample material. The selective attenuation of side echoes can effectively enhance the signal-to-noise ratio of the measurements, leading to clearer and more accurate imaging outputs.

The probe, by minimizing the interference from side signals, may be able to better localize and identify features such as micro-cracks, voids, or delaminations; details that may be lost or obscured due to reflections and scatter from a non-optimized probe tip design.

The ability of the coating to be tailored according to specific needs without requiring complete replacement or extensive reconfiguration of the probe system offers significant operational and cost advantages. This allows for a more adaptive use of the system to different material types or diagnostic requirements without compromising the quality of results or needing frequent recalibration.

Optionally, reshaping comprises abrading the probe tip, wherein the tip conditioning unit comprises an abrading surface for interacting with the probe tip.

The abrasive reshaping process leverages a specially configured abrading surface that interacts with the probe tip. This surface may be fabricated from materials like for example diamond or aluminium oxide, which provide the necessary hardness to effectively reshape the probe tip. The abrasion may counter the morphological deformations caused by repeated scanning over rugged sample surfaces or hard material layers.

The abrading surface can be configured in various configurations to match the specific wear patterns of the probe tip. For example, a flat abrading surface may serve basic reshaping needs, while a concave or patterned surface can offer more complex reshaping options that reflect the typical deformation experienced by the tip. This variability ensures that the probe tip can be restored to its ideal shape, which can be important for maintaining the precision of the acoustic microscopy.

The conditioning unit may be configured to allow the probe tip to interact with the abrading surface in multiple orientations and movements. For instance, rotating the probe or moving it along a predetermined path against the abrading surface ensures that all sides of the tip are uniformly conditioned, addressing uneven wear.

Concurrently with the abrasion, the conditioning unit can incorporate mechanisms like debris collectors and/or local vacuum systems to remove any particulate matter dislodged during the reshaping process. This may ensure that debris do not contaminate the sample or interfere with the acoustic signal integrity.

By integrating sensors that monitor the acoustic feedback from the sample and/or an air/vacuum interface, the system can detect changes in the condition of the probe tip and adequately trigger the conditioning process autonomously. Models may be employed which can further enhance the system's predictive capabilities, determining the optimal frequencies and durations for conditioning based on historical data and real-time feedback.

Optionally, the abrading surface is positioned at an angle with respect to the sample, and wherein the probe tip is attached to a base that is configured to rotate to bring the probe tip into contact with the abrading surface during the conditioning state, wherein the conditioning unit is further provided with a debris collector positioned approximate to the probe tip during abrading and/or cleaning in order to collect debris dislodged from the probe tip.

The probe tip, mounted on a configurably rotatable base, can be aligned with the abrading surface which may be positioned at various angles. This positioning ensures that only specific portions of the tip's surface engage with the abrading surface. Such an approach enables precise reshaping and conditioning of the probe tip, targeting only worn or irregular areas without affecting the overall structural integrity of the tip.

Adjacent to the abrading area, a debris collector may be situated to capture particles and debris dislodged during the abrading process. This setup can be important as it prevents the debris from contaminating the sample space or the probe itself, which can otherwise lead to inaccurate imaging results or further damage to the tip.

The debris collector not only maintains a clean working environment but also enhances operational efficiency by reducing the need for additional cleaning cycles and minimizing downtime of the system.

Optionally, the debris collector is positioned beneath the probe tip.

Optionally, the abrading surface of the conditioning unit has a variable abrading configuration that enables a multidirectional abrasion of the probe tip as it moves in a substantially linear path.

Any deformities or irregularities in the probe tip can lead to scattering or absorption of acoustic waves, resulting in poor image resolution and inaccurate measurements. Maintaining a consistent and uniform probe tip shape or geometrical configuration through multidirectional abrasion helps in reducing these issues, thereby enhancing the overall reliability of the microscopy system.

The variable configuration of the abrading surface facilitates multidirectional abrasion, which can be important for uniform wear of the probe tip. By enabling abrasion from multiple angles and/or directions, the system ensures that the probe tip maintains its desired shape or geometric configuration, important for consistent acoustic wave transmission and reflection.

Through mechanisms such as adjustable angles, dynamically changing movements, or even selecting different abrasion regions and/or abrasive textures, specific areas of the probe tip that require more intensive conditioning may be better targeted. This targeted approach helps restore the probe tip geometry without excessive material removal, thereby prolonging the lifetime of the probe tip.

Optionally, the abrading surface of the tip conditioning unit is contoured into a concave shape.

By designing the abrading surface with a concave contour, the system explicitly addresses the need for precisely controlled abrasion that synchronizes with the naturally occurring wear patterns of the probe tip during extended use.

The concave structure of the abrading surface provides a focused interaction area, where only specific parts of the probe tip that require reshaping come into contact with the abrasive material. This selective abrasion helps maintain the important geometrical features of the probe tip necessary for reliable acoustic signal transmission and reception.

The contouring of the abrading surface enables uniform pressure distribution during the tip conditioning process. Given that the concave abrading surface is configured to specifically interact with the probe tip in a controlled manner, it is inherently more efficient at managing the debris produced during the abrading process. This efficiency can be enhanced further when integrated with a debris collection system, ensuring that the operating environment remains clean and contamination-free, which is of great importance in semiconductor manufacturing.

Optionally, the tip is reshaped through abrasion and one or more coating layers are applied to the tip. Concurrently or subsequent to abrasion, the probe tip can be coated with a material that enhances its acoustic properties and durability. The coating process may involve applying a primary coating layer that may be replenished or replaced as it wears out. Subsequent layers can be added over the existing coating to restore the tip's condition without the need to remove the probe from operation. The coating materials may be selected based on their ability to interface effectively with the sample while providing desired acoustic characteristics, such as reducing spurious echoes or enhancing signal transmission.

Optionally, said information about the condition of the probe tip is determined through acoustical feedback analysis comprising determining values indicative of predetermined one or more physical characteristics of the probe tip based on variations in the detected echoes at a tip-sample interface and/or at the tip end when positioned in vacuum, gas or liquid and/or in contact with a reference surface, wherein said variations in the echoes reflect changes in shape, amplitude, or phase of the acoustic signal due to tip condition alterations, wherein conditioning parameters for restoring the probe tip are adjusted based on said determined values relative to reference values established through computational modeling.

The acoustic feedback obtained during normal operations may be analyzed. Specific characteristics of the echo, such as shape, amplitude, and phase variations, may be key indicators of the probe tip's condition.

Predefined reference values may be important in this analysis. These values may represent the ideal or expected characteristics of the echoes when the probe tip is in optimal condition. Deviations from these reference values may indicate changes in the probe tip, possibly due to wear, deformation, or contamination.

As the ultrasound acoustic microscopy system operates, the detector may continuously monitor the echoes returning from the sample. The evaluation module may then compare these detected echoes against the predefined reference values. Changes in the echo's amplitude, phase, and/or symmetry may provide an indication of issues such as excessive tip wear and/or contamination by particulate debris.

The condition of the probe tip can be effectively monitored by analyzing the variations in the echoes detected when the tip interacts with different environments, whether in air, vacuum, or when in contact with a sample or a reference surface. These variations in echo patterns allow to determine physical characteristics of the probe tip, such as its geometric shape or surface integrity.

Alternatively or additionally, the condition of the probe tip can be determined through topographical characterization. This can be performed in various ways. In some examples, this involves scanning the probe tip over a reference surface with known sharp features. For example, by moving the probe against a precisely defined sharp edge or nanostructure, the system can compare the measured topographical data with the expected profile of the reference feature. Deviations between the expected and observed measurements indicate wear, deformation, or contamination of the probe tip. This method provides a direct assessment of the physical condition of the probe tip, independent of acoustic feedback, allowing for timely conditioning or replacement. Implementing topographical characterization may enhance the accuracy and/or reliability of ultrasound acoustic microscopy measurements by ensuring the probe tip maintains its required geometrical precision.

If deviations from the reference values are detected, the evaluation module triggers the tip conditioning unit. This immediate response can be important to minimize operational downtime and prevent damage to the sample or further degradation of the probe tip. Based on the severity and nature of the detected deviations, the system may adjust the conditioning parameters. Each action may be refined based on the specific needs identified during the feedback analysis, ensuring tailored maintenance that directly addresses the issues detected.

Besides corrective actions based on immediate feedback, the system can also use predictive algorithms to schedule maintenance before significant degradation occurs. By analyzing trends in the acoustic feedback over time, the system can predict when the probe tip will in some examples require maintenance, scheduling these actions during periods of minimal impact.

In some examples, the system may use a database of historical data and machine learning algorithms to refine the sensitivity of detection for changes in echo characteristics, improving the accuracy of condition assessments over time.

It will be appreciated that alternative waveforms, beyond the conventional compressional waves, may be employed to ascertain the condition of a probe tip within an ultrasound acoustic microscopy system. Specifically, the utilization of various wave types, such as shear waves, surface acoustic waves (SAWs), or Lamb waves, could provide enhanced sensitivity or different modalities of interaction with the probe tip, potentially revealing additional or different aspects of the tip's condition.

The variations in the echoes, influenced by the type of wave used, would then be analyzed by the evaluation module of the system. Such analysis would include examining changes in amplitude, phase shift, and other wave characteristics that could indicate wear, deformation, or contamination of the probe tip.

Optionally, the abrading surface is tilted relative to the axis of the probe tip.

Optionally, the abrading surface is rotated at a controlled speed during abrasion.

Optionally, cleaning and/or reshaping involves the utilization of a cleaning solution and/or acid bath. This method is designed to remove particulate debris from the probe tip, where the debris, due to its rougher and potentially less dense material properties compared to the probe tip material, may be selectively etched away more rapidly. This process facilitates the removal of undesirable particles that may adhere to the probe tip during acoustic microscopy operations.

Additionally, the method may include reshaping the probe tip to optimize its performance and longevity. This reshaping process may be aimed at smoothing and rounding over any sharp edges or irregularities that have developed on the tip surface as a result of wear and tear or damage during usage.

Optionally, an ultrasonic bath is used. To enhance the cleaning effectiveness, the method may incorporate an ultrasonic burst, optionally modulated at a preset frequency, to agitate the solution and accelerate the removal of debris. This ultrasonic action helps to dislodge and dissolve particles more effectively, ensuring a thorough cleaning of the probe tip surface.

According to an aspect, the invention provides for an ultrasound acoustic microscopy system, comprising: a probe tip configured to contact a sample; an ultrasound generator configured to emit an ultrasound acoustic signal into the sample; a detector configured to detect echoes from the sample; and an evaluation module configured to assess the performance of the probe tip using the imaging data and/or predefined criteria to determine whether the probe tip requires conditioning; a tip conditioning unit configured to condition the probe tip to maintain or enhance a target characteristic of the probe tip; and a control system configured to selectively activate the tip conditioning unit to condition the probe tip at one or more instances during and/or between ultrasound acoustic microscopy measurements based on the assessment by the evaluation module.

Various performance verification methods may be used. Firstly, acoustic measurements in the sample may be carried out. This may involve deploying the ultrasound acoustic microscopy system to conduct measurements directly within a sample. The system utilizes an ultrasound generator to emit acoustic signals into the sample. The detector captures the returning echoes, which are analyzed to assess the internal structure and integrity of the sample. This can verify the operational performance of the probe tip in a real-world scenario, ensuring that the probe tip is functioning optimally under typical measurement conditions.

Secondly, an acoustic measurement in air or vacuum may be carried out. This may involve positioning the probe tip in air and conducting ultrasound acoustic measurements without direct contact with any sample. The purpose of this method is to detect any anomalies in the echo patterns that are indicative of defects or deterioration in the probe tip itself. By measuring in air, the system can isolate the probe tip's performance from sample-related variables, allowing for precise evaluation of the tip's condition based on changes in echo characteristics such as amplitude and phase.

Thirdly, an acoustic measurement in a known sample may be exploited. The system may perform acoustic measurements on a sample with predefined characteristics. This can be used to calibrate the system and validate its accuracy by comparing the detected echoes against expected results from the known sample. This method serves as a benchmark for assessing the system's performance and ensures that the probe tip maintains its effectiveness over time and use. The known sample provides a consistent medium for repeated evaluations.

It will be appreciated that the system may be a Half-Wavelength Contact Acoustic Microscopy (HaWaCAM) system. Such a HaWaCAM may require a relatively large tip-sample contact radius/diameter and therefore a relatively large and heavy tip (for example 50-100 micrometer high, 100-200 micrometer wide). It may have a large tip-radius (e.g. order 10 micrometer). A GHz piezotransducer may be employed. This piezotransducer may for instance be coupled to the probe. Image contrast may depend on acoustic impedance differences. Advantageously, no contact layer may be needed (cf. contact mode).

Furthermore, the HaWaCAM system may need relatively large static forces applied to tip.

The system of the disclosure provides for an improved way to deal with the debris and tip wear due to damage to HaWaCAM tip. HaWaCAM systems use acoustics, so that means having dirt

HaWaCAM tips may be significantly larger than AFM tips. In some examples, AFM tips may be too small to be cleaned by abrasion (cf. breaking). Due to the exceedingly small size of the AFM probe tip, it may be difficult to adequately correct or condition the tip once contamination or wear has occurred.

The invention can effectively exploit the bulkiness of the HaWaCAM tip to increase lifetime (the significant size means it can be reshaped multiple times). For instance, abrasion may be used to counteract the negative effect of abrasion on tips by reshaping them. Abrasion may be used to remove debris and cleaning the tip for an increased lifetime.

For instance, the HaWaCAM tip may be moved to a rough patch for cleaning every scan line, or an entire scan could be made after which the HaWaCAM tip could be moved to rough patch for cleaning, or a number of scans could be conducted before said tip needs to be cleaned.

In some examples, acoustic measurements are used to monitor the condition of the probe tip. This involves observing changes in the tip-sample echo, which can vary in amplitude, phase, or shape if the tip undergoes wear or damage.

In some examples, a predictive model is utilized to determine the timing for maintenance or reshaping of the probe tip based on the variations in the acoustic feedback received from the tip-sample interface. This model may use historical data and/or real-time monitoring to forecast when the tip will (likely) require maintenance.

In some examples, the tip-sample echo serves as a feedback mechanism for real-time assessment of the probe's condition. Changes in the echo characteristics indicate changes in the tip condition, prompting maintenance actions such as reshaping or cleaning.

In some examples, reference tip-sample echoes are established during initial calibration. These references may be used to compare with ongoing measurement echoes to detect deviations indicative of tip wear or damage.

In some examples, the system incorporates a feedback loop that automatically adjusts or suggests adjustments to the probe tip (cf. conditioning) based on the analysis of the tip-sample echoes.

In some examples, variations in the tip-sample echo are specifically analyzed for changes in the time delay of echoes.

It will be appreciated that while the described ultrasound acoustic microscopy system and method are particularly advantageous for the inspection of multi-layered semiconductor structures, they are not limited to such applications. The principles and functionalities outlined may also be effectively utilized in the inspection of single-layered semiconductors or other materials where high-resolution imaging and precise defect detection are required. The system's ability to adapt to different material properties and layer complexities without compromising on the accuracy and resolution of acoustic imaging makes it a versatile tool for a wide range of ultrasonic microscopy applications beyond just multi-layered semiconductors.

It will be appreciated that the described ultrasound acoustic microscopy (UAM) system not only accommodates the analysis of single and multi-layered samples but may also adept at inspecting three-dimensional structures. For instance, the samples may have three-dimensional architectures featuring components such as vias, gates, and other interconnects. By leveraging probe tip arrangements such as those used in the Half-Wavelength Contact Acoustic Microscopy (HaWaCAM), this system can maintain accuracy and reliability even in the challenging environments presented by 3D semiconductor components.

It will be appreciated that any of the aspects, features and options described in view of the method apply equally to the system and the described devices and sub-components. It will also be clear that any one or more of the above aspects, features and options can be combined.

### BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawing:
Fig. 1 shows a schematic diagram of an embodiment of an ultrasound acoustic microscopy system;
Fig. 2 shows a schematic diagram of an embodiment of an ultrasound acoustic microscopy system;
Fig. 3 shows a schematic diagram of an embodiment of a tip conditioning unit;
Fig. 4 shows a schematic diagram of an embodiment of an abrading surface;
Fig. 5 shows a schematic diagram of an embodiment of a tip conditioning unit;
Fig. 6 shows a schematic diagram of an embodiment of a tip conditioning unit;
Fig. 7 shows a schematic diagram of a tip-sample contacts;
Fig. 8 shows a schematic diagram of an embodiment of a tip conditioning unit;
Fig. 9 shows a schematic diagram of a method.

### DETAILED DESCRIPTION

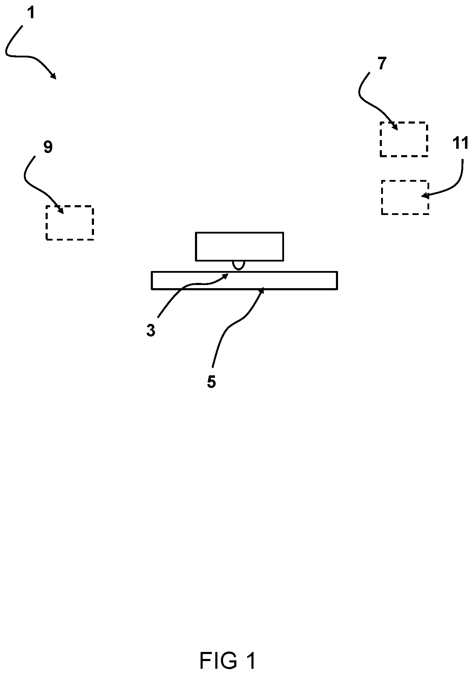

Fig. 1 shows a schematic diagram of an embodiment of an ultrasound acoustic microscopy system 1. The system 1 comprises a probe tip 3 configured to contact a sample 5 to be characterized by the system 1. The system 1 also comprises an ultrasound generator configured to emit an ultrasound acoustic signal into the sample, and a detector configured to detect echoes from the sample 5. An evaluation module 7 is provided that is configured to assess the performance of the probe tip 3 using the imaging data and/or predefined criteria to determine whether the probe tip 3 requires conditioning. A tip conditioning unit 9 is provided that is configured to condition the probe tip to maintain or enhance a target characteristic of the probe tip 3 by reconditioning. A control system 11 is provided that is configured to selectively activate the tip conditioning unit 9 to condition the probe tip 3 at one or more instances during and/or between ultrasound acoustic microscopy measurements of said sample 5 based on the assessment by the evaluation module 7.

A piezoelectric transducer may be used to emit acoustic waves that are directed into the sample through a solid contact point, rather than through a liquid medium. Such a setup can enhance the reflection and transmission of acoustic energy into the sample. The device captures the echo patterns from the sample, which vary based on the internal structures and any defects present. These variations can then be analyzed to construct a high-resolution image of the sample's internal structure.

By operating at higher frequencies and removing the water layer, the system can image finer structures deeper within the sample. Eliminating the water coupling layer significantly reduces signal loss, improving the sensitivity and accuracy of defect detection.

In some examples, the system 1 is a Half-Wavelength Contact Acoustic Microscopy (HaWaCAM) system. The HaWaCAM system can exclude a liquid (e.g. water) coupling layer that traditionally hampers signal quality due to significant attenuation. By operating at frequencies of at least 0.7 GHz, preferably at least 1 GHz, HaWaCAM allows for enhanced imaging resolution down to nanometers, facilitating enhanced visualization of internal structures within semiconductor materials that are stacked or contain metal layers. However, the system's reliance on a large/heavy probe tip necessitates a robust solution for maintaining the tip's integrity over extended use to prevent quality degradation in imaging.

The tip conditioning unit can activate at determined/calculated intervals, determined either through predefined wear patterns or real-time condition assessments, to perform necessary conditioning tasks such as reshaping and/or recoating the tip. This selective conditioning can occur without hampering the ongoing measurement process, thereby improving efficiency and reducing operational downtime.

Reshaping options may for instance include abrasive interactions with a specially configured surface to finely tune the probe tip's shape or geometric configuration. Abrasive surfaces can be angled or contoured to match the desired/targeted tip profile, enabling precise material removal and shaping.

In some examples, multiple layers of coating materials can be applied to the probe tip by the tip conditioning unit to protect and optimize the tip's interaction with the sample. These coatings can be specifically configured to attenuate unwanted acoustic reflections and/or to enhance durability.

In some examples, a debris collection system is positioned near the conditioning site to capture particulate matter removed during the conditioning process, thereby preventing contamination of the sample and surrounding environment.

The exemplary coatings and conditionings may also aid in protecting the tip from the accumulation of debris, which can affect measurement accuracy and tip performance.

In some examples, sensors may be integrated into the system that can predict wear patterns and the optimal timing for conditioning, based on continuous feedback received from the tip-sample interactions. A predictive maintenance capability can reduce the guesswork in scheduling maintenance and ensures consistent performance.

In some examples, leveraging data processing and analytics (e.g. involving modeling such as AI modeling) the system can predict when the tip may require maintenance before significant degradation occurs. This predictive capacity ensures that the tip is conditioned only when necessary, enhancing maintenance resources and scheduling without compromising on measurement quality and/or uptime.

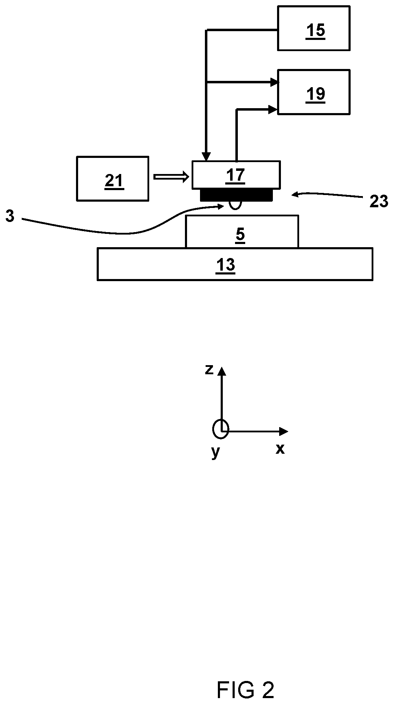

Fig. 2 shows a schematic diagram of an embodiment of an ultrasound acoustic microscopy system 1. The ultrasound acoustic microscopy system 1 comprises a sample carrier 13, a signal generator 15, a scanning head 17, a signal processor 19 and a scanning mechanism 21.

The carrier 13 is provided to carry a sample 5 to be inspected. The sample 5 is for example a semi-finished- or completed semiconductor product. For a semi-finished semiconductor product it may be desired to exactly determine the placement of earlier formed structures in order to properly align further layers. In the case of a completed semiconductor product it may be desired to verify if it complies with quality requirements. Such a verification may also be applied to semi-finished products. In this way malfunctions of the semiconductor manufacturing process can be rapidly detected and corrected. Other samples and/or applications are also envisaged.

The signal generator 15 is provided to generate an actuation signal having a frequency of at least 0.5 GHz, preferably at least 0.8 GHz, more preferably at least 1GHz. The scanning head 17 is provided with a cantilever 23 that comprises a transmission tip 3 to contact the sample 5 to therewith transmit an ultrasound acoustic signal generated in response to the actuation signal, as an ultrasound acoustic wave into the sample. A same or different tip may be used for reception. The reception tip may be configured to receive an acoustic signal resulting from reflections of the ultrasound wave from within the sample.

The signal processor 19 is to generate an image signal in response to a sensor signal obtained by conversion of the received acoustic signal. In some examples, a receiving element associated with the reception tip directly converts the reflected acoustic signal into the sensor signal.

The image signal, contains the information representative for subsurface features extracted from the sensor signal.. In some examples, the scanning mechanism 21 and/or a separate module may also provide an input signal, for a vertical position controller that controls a vertical position of the scanning head 17 with respect to the surface of the sample using a control signal.

The scanning mechanism 21 may be configured to displace the scanning head 17 in the plane xy relative to the sample 5, along the surface of the sample. Therewith the vertical position controller may be provided to control the vertical position of the scanning head 17 with respect to the sample surface of the sample during this displacement. However, in some examples, only one scanning mechanism may be used for xyz movement.

In some examples, the scanning mechanism 21 may be configured to control the movement of the sample holder 13 rather than displacing the scanning head 17. In this configuration, the sample 5 is moved relative to a stationary scanning head 17, allowing precise positioning of the sample in the xy plane or even along the xyz axes. The vertical position controller can adjust the vertical position of the sample holder 13 with respect to the scanning head 17 during displacement. Controlling the sample holder 13 instead of the probe may offer advantages such as improved mechanical stability and/or reduced mass of the moving components, which can enhance measurement precision and minimize mechanical stresses on the probe tip.

In some embodiments, a rough patch is used to abrade and reshape the probe tip periodically. This helps maintain the tip's shape and functionality by rounding off the tip to counteract wear and deformation that occur during scanning.

In some embodiments, various motions or patterns on the rough patch are used to ensure uniform abrasion of the probe tip. This could involve linear movements or specific patterning on the rough patch to achieve desired abrasion effects.

In some embodiments, the rough patch is configured in a bowl shape to facilitate easier and more effective reshaping of the probe tip.

In some examples, the abrading surface is moved instead of the tip.

In some embodiments, a (weak) polymer is applied to the rough patch to initially abrade the tip. In this way, a softer material may be used that wears down before the tip does, thereby preserving the integrity of the tip during conditioning. Other suitable materials may also be used.

In some embodiments, the probe tip is coated with a material that is conducive to reshaping or repair. This could involve applying a layer that can be abraded away and then reapplied to restore the tip to its original condition without the need to replace the entire tip.

In some embodiments, automated or predictive maintenance techniques are employed to determine when tip conditioning is required. This could involve monitoring changes in acoustic feedback from the tip-sample interface to predict wear and schedule maintenance.

In some embodiments, debris generated during tip conditioning is managed to prevent contamination of the sample. Techniques may include using static forces, vacuums, and/or specially designed materials at the conditioning site to control and collect debris effectively.

In some embodiments, the tip conditioning process is integrated into a larger system that allows for continuous or periodic maintenance without manual intervention. This could involve automated systems that handle both the abrasion of the tip and the management of debris in a seamless cycle.

In some embodiments, the shape of the probe tip can be modified during the conditioning process. This includes altering the tip from a spherical to an elliptical shape or other geometries based on specific measurement requirements or performance characteristics.

In some embodiments, the conditioning process involves using a material that is different from the rough patch to reshape or repair the tip. This may include a preconfigured abrasive or coating material that interacts with the tip material to effect desired changes without excessive wear.

In some embodiments, the positioning of the rough patch relative to the probe can be adjusted. This adjustment can be to facilitate easier access for tip conditioning, or to optimize the angle or intensity of abrasion.

In some embodiments, the tip conditioning mechanism incorporates a mechanism for applying and reapplying coatings to the tip as part of the maintenance cycle. This could involve a mechanism for adding layers of protective or functional coatings that wear away over time and can be replenished.

In some embodiments, the conditioning process is monitored and controlled using acoustic feedback from the tip-sample interaction. This feedback helps determine the effectiveness of the conditioning process by observing changes in the acoustic signals resulting from tip alterations.

In some embodiments, a predictive maintenance model is utilized, which uses data from previous tip wear patterns to predict future wear and schedule maintenance. This model can be based on machine learning algorithms that analyze historical data to improve prediction accuracy.

In some embodiments, the force applied during the conditioning process is carefully controlled to optimize tip reshaping without causing additional damage. This may involve precise mechanical controls that adjust the pressure exerted by the rough patch on the tip.

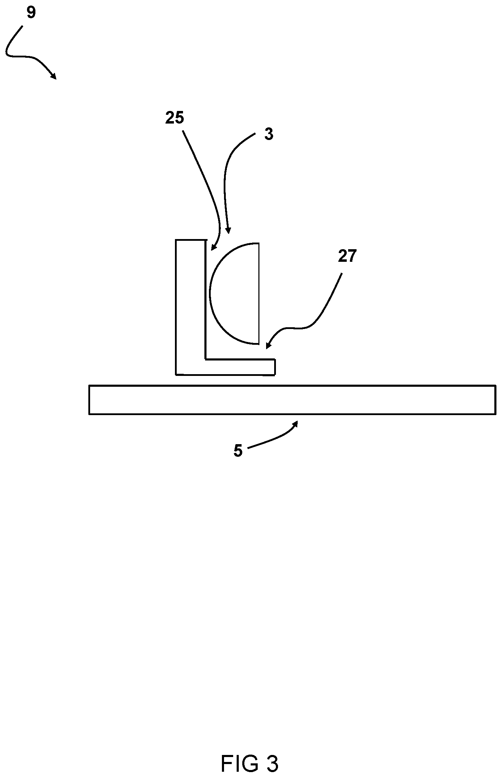

Fig. 3 shows a schematic diagram of an embodiment of a tip conditioning unit 9 which is configured to condition the probe tip 3 by reshaping the probe tip. The system 1 of the disclosure may include various mechanisms for reshaping the probe tip when wear or deformation occurs.

In this example, reshaping comprises abrading the probe tip 3, wherein the tip conditioning unit 9 comprises an abrading surface 25 for interacting with the probe tip 3.

The exemplary abrading surface 25 is positioned at an angle with respect to the sample 5. The probe tip 3 may be attached to a base that is configured to rotate to bring the probe tip 3 into contact with the abrading surface 25 during the conditioning state.

In this example, the abrading surface 25 is a rough patch arranged perpendicular to a longitudinal/horizontal directional of the sample 5. The abrasive interactions with the rough patch enable restoration of the probe tip 3 to a targeted/predefined shape. This approach helps avoid frequent replacements and recalibrations, which are costly and time-consuming.

Debris generated during scanning can contaminate semiconductor samples, affecting the manufacturing process. In this example, the conditioning unit 9 is further provided with a debris collector 27 positioned approximate to the probe tip 3 during abrading and/or cleaning in order to collect debris dislodged from the probe tip 3. Additionally or alternatively, various other mechanisms for collecting debris from the probe tip 3 may be used. For example, a local vacuum and/or an (electro)static force may be created to ensure debris adherence to specific areas away from the sample 5.

The probe tip 3 may be a HaWaCAM cantilever tip. HaWaCAM may for example address limitations in traditional acoustical microscopy where water as a coupling layer may lead to significant attenuation. A direct solid contact with the sample may be employed, eliminating the coupling layer and allowing for higher frequency use (up to 4 GHz or even more), which enhances resolution and penetration depth in sample imaging.

The probe tip 3 may be significantly larger than those used in classic AFM systems, which typically have nanometer contact sizes. This facilitates a broader contact area, reducing the pressure required for effective imaging and minimizing sample damage.

The contact diameter may be related to the acoustical wavelength, influencing both the frequency of operation and the resolution capability.

The system may be configured to capture echoes that vary in amplitude and travel time based on features within the sample. In some examples, changes in the echo pattern may be used to assess the condition of the probe tip, indicating when reshaping or maintenance is required.

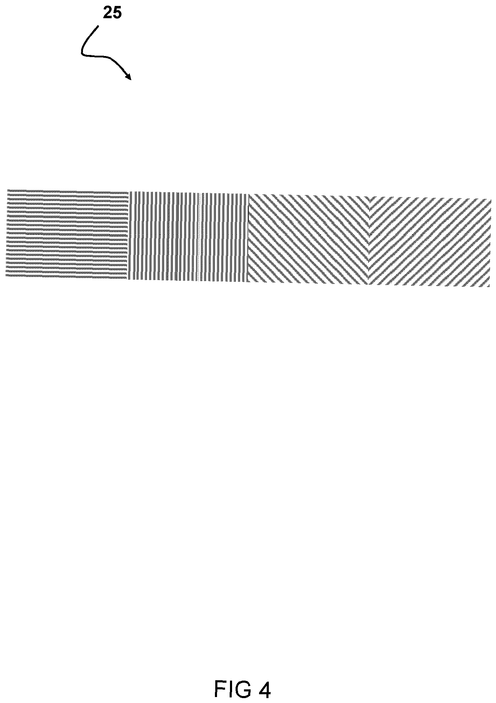

Fig. 4 shows an embodiment of a top schematic representation of an abrading surface 25 of a conditioning unit 9. The abrading surface 9 has a variable abrading configuration that enables a multidirectional abrasion of the probe tip 3 as it moves in a substantially linear path.

The rough patch may be designed with an intricate pattern. This pattern can vary in roughness and/or elevation at different parts. Other abrading parameters may also be adjusted. As the cantilever moves in a straightforward linear path, different aspects of the tip engage with different patterns on the rough surface. This can enable selective abrasion of specific parts of the tip, facilitating precise reshaping or cleaning operations.

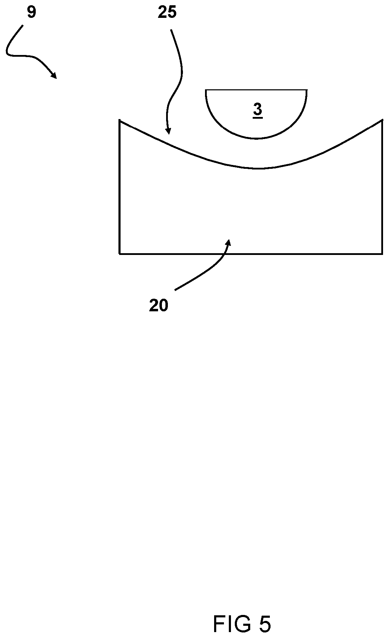

Fig. 5 shows a schematic diagram of an embodiment of a tip conditioning unit 9. The conditioning unit 9 has an abrading surface 25 that is contoured into a concave shape.

In this example, a bowl-shaped structure 20 with an abrading surface 25 is employed. The concave shape of the bowl allows the rough patch to focus its abrasive effect more effectively on specific areas of the probe tip 3. This localized abrasion can target worn or damaged areas more precisely, ensuring a more uniform wear and efficient reshaping.

As the probe tip 3 engages with the bowl-shaped patch, the curvature can guide the tip to roll smoothly along the surface, enabling a consistent abrasion pattern. This is particularly effective for achieving or maintaining a spherical or specifically designed probe tip 3 shape, typical for a HaWaCAM cantilever tip.

A bowl-shaped rough patch allows for multidirectional movement of the tip during conditioning. As the probe tip is moved or rotated within the bowl, different areas of the probe tip surface come into contact with the abrasive material, ensuring an even and controlled abrasion. This approach can mitigate uneven wear and deformation, which is common in flat abrasive surfaces where the tip might repeatedly contact the surface in the same manner, leading to nonuniform reshaping patterns.

The bowl shape can help distribute the pressure exerted by the probe tip 3 more evenly across its surface during the cleaning process. This reduces the likelihood of inducing additional damage to the tip, which might occur if excessive pressure is applied to any single point during the abrasion.

A more uniform contact area is particularly beneficial in applications where maintaining the structural integrity of the probe tip is critical for sensitive acoustic measurements.

Reshaping the tip to a specific curvature, such as a spherical form, optimized for acoustic microscopy, enhances the acoustic energy transfer between the probe and the sample.

In some examples, the bowl's shape could also be utilized to incorporate materials with specific acoustic properties that might aid in damping unwanted acoustic signals or reflections.

In some examples, the bowl-like structure can act as a containment area for debris and particles dislodged from the tip during the conditioning process.

In some examples, coupling the bowl shape with mechanisms like electrostatic forces or a localized vacuum system could effectively remove and contain debris, effectively minimizing the risk of recontamination of the probe or the sample.

The system could integrate sensors within the bowl-shaped patch to monitor the condition of the probe tip and the effectiveness of the abrasion in real-time.

In some examples, by assessing the acoustic feedback from the conditioned tip, the system can dynamically adjust its approach to conditioning.

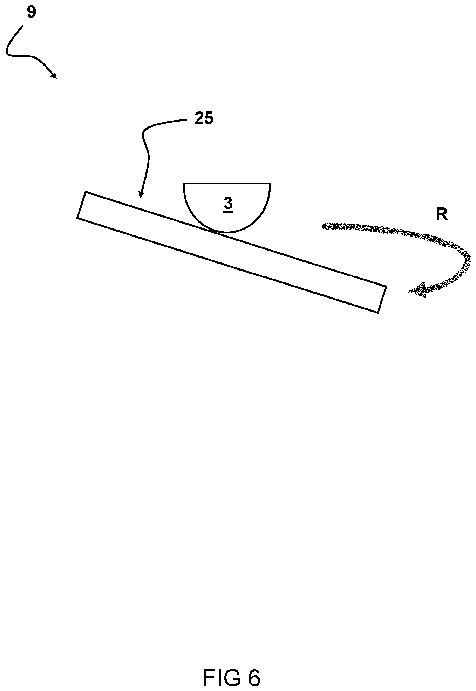

Fig. 6 shows a schematic diagram of an embodiment of a tip conditioning unit 9. In this example, the abrading surface 25 is tilted relative to the axis of the probe tip 3. Additionally, in some examples, the abrading surface 25 can be rotated R at a controlled speed during abrasion, as shown in fig. 6.

The example in fig. 6 shows a rotating tilted flat rough patch for abrasion. This can involve using a specially designed rough patch positioned adjacent to the scanning area. The rough patch itself may be flat but mounted on a pivot that allows it to tilt. As the rough patch rotates, it presents different angles of its abrasive surface to the probe tip at different times. This dynamic interaction allows for a more controlled and gradual abrasion process compared to static abrasive methods.

By rotating and tilting, the rough patch can abrade the tip from multiple angles, which can be important for maintaining a symmetrical and uniformly rounded tip shape. Furthermore, the rate of rotation and angle of tilt can be adjusted based on the wear pattern observed on the probe tip, allowing for targeted reshaping that only removes material where necessary.

Since the rough patch can be adjusted to make gentle contact with the probe tip, it can minimize the risk of excessive wear or damage that might occur with more aggressive abrasion techniques.

When the probe tip is pressed against the sample or the abrasive patch, the natural mechanics of the contact can cause the tip to rotate slightly due to the uneven application of downward forces. This phenomenon can be exploited to assist in the rounding of the probe tip as follows. As the probe tip undergoes slight rotations during regular scanning operations or while being pressed against the rough patch, these micro-rotations help in evenly distributing the wear, leading to a naturally rounded shape over time. Utilizing the natural movements of the probe to aid in its maintenance reduces the need for complex mechanical systems to rotate or adjust the tip manually.

In some examples, shown conditioning unit 9 is provided or integrated in the HaWaCAM system's operational protocol, where the probe tip's condition is continuously determined/monitored/assessed, for example using models and/or via acoustic feedback from the sample. If deviations from the optimal tip shape are detected, the system can activate the conditioning unit, which includes the rotating rough patch. The control system may for example adjust the rotation speed, tilt angle, and the duration for which the tip is in contact with the rough patch based on the specific conditioning needs identified during the scan.

It will be appreciated that the tilting can also be used without rotation in some examples.

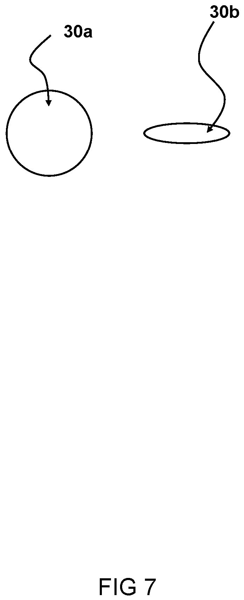

Fig. 7 shows a schematic diagram of different tip-sample contacts. The tip-sample contact area 30a, 30b in the ultrasound acoustic microscopy system like HaWaCAM can be improved by tweaking the shape of the probe tip to align with specific static forces and material combinations of the sample and tip. This customization can be advantageous due to the complex interactions at the tip-sample interface, which can significantly influence the quality and accuracy of acoustic measurements.

In some examples, a spherical tip contact area 30a may be desired. In other cases, a non-spherical contact area 30b may be desired. This may for instance focus the acoustic energy more narrowly, which would be beneficial for probing smaller or more detailed features on the sample surface. This shape could also reduce the contact area.

Different materials may have varying acoustic impedances, so the tip material may be chosen to match or complement the sample material to optimize acoustic transmission and minimize reflections at the interface.

The static force applied through the tip to the sample may need careful adjustment based on the tip and sample material properties as well as the desired depth of penetration and resolution.

The tip conditioning unit can be designed to modify the tip shape based on feedback from the acoustic measurements. For instance, if a particular sample is used, the system may automatically reshape the tip to its optimal form for that sample.

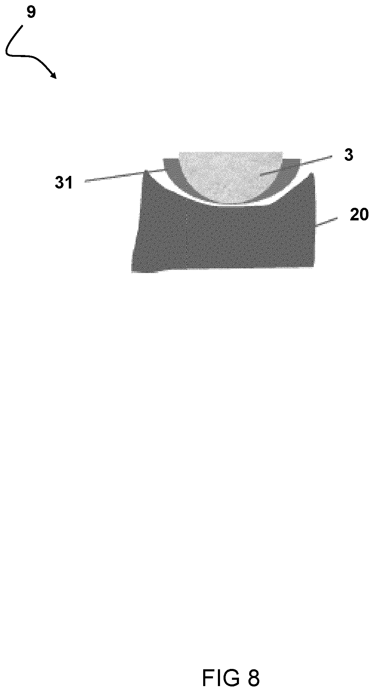

Fig. 8 shows a schematic diagram of an embodiment of a tip conditioning unit 9 including a bowl-shaped patch filled with a material 31, for example a weak polymer, to condition the probe tip of the ultrasound acoustic microscopy system (e.g. HaWaCAM system) to mitigate tip wear and/or improve the metrological capabilities of the system. The use of coatings on the probe tip may protect the tip and/or modify its acoustic properties, potentially to attenuate unwanted side echoes.

In this example, the bowl-shaped structure is filled with a material 31, e.g. weak polymer. The thickness of the (e.g. polymer) material 31 may vary dependent on the acoustic wavelength (lambda). Below the tip, the thickness may be about a quarter (*λ*/4) or half (λ/2) of the acoustic wavelength used in the HaWaCAM system. This thickness may be important because it determines how the acoustic waves are reflected back into the tip. A thickness of a/4 or λ/2 may be advantageous for enhancing efficient transmission of acoustic energy back to the tip.

To the side of the probe tip 3, increasing the thickness of the soft material 31 (e.g. polymer), as shown in fig. 8, can help to absorb and dissipate the acoustic energy that strays from the central axis of the tip-sample interaction. This design can help to minimize the lateral acoustic energy which may otherwise contribute to noise and spurious signals that can degrade the quality of the microscopy imaging.

The properties of the material 31 (e.g. polymer), such as its acoustic impedance and elasticity, can be adjusted to maximize the absorption of spurious acoustic waves. By tuning these properties, the interface wave traveling along the cantilever tip-polymer interface can be managed more effectively. This wave, if not controlled, may lead to unwanted reverberations that can interfere with the clarity and accuracy of the acoustic imaging. By ensuring that these waves are progressively absorbed as they travel along the interface, the system can maintain high-resolution imaging capabilities and reduce artifacts that could obscure critical details in the sample structures (e.g. semiconductor substrate) being examined.

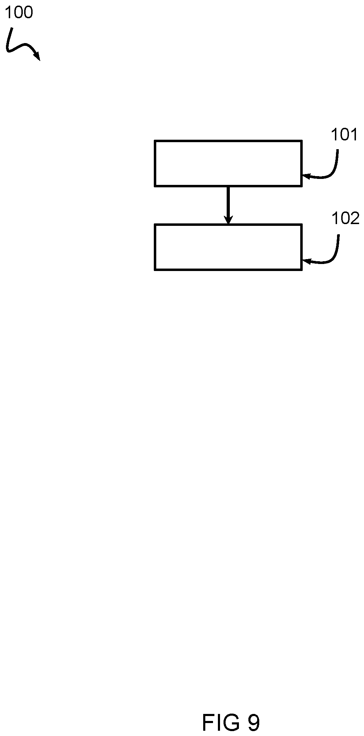

Fig. 9 shows a schematic diagram of a method 100 for operating an ultrasound acoustic microscopy system equipped with a probe tip, wherein the probe tip is configured to be placeable in contact with a sample to emit an ultrasound acoustic signal into the sample for performing ultrasound acoustic microscopy measurement. In a first step 101, information about a condition of the probe tip is determined. In a second step 102, the probe tip is selectively conditioned with a tip conditioning unit of the ultrasound acoustic microscopy measurement system, if the determined information about the condition of the probe tip indicates a need, to maintain or enhance a target characteristic of the probe tip. The conditioning is performed selectively at one or more instances during and/or between ultrasound acoustic microscopy measurements.

Traditional acoustic microscopy, which uses a piezoelectric transducer and acoustical lens with a water coupling layer, may be limited in frequency (typically up to 1 GHz) and thus resolution, managing only about 3 micrometers in PMMA and 6 micrometers in silicon oxide, which may be insufficient for detecting nanometer-scale defects. The method of the disclosure may employ acoustic microscopy (cf. HaWaCAM) that removes the need for a water coupling layer, which traditionally causes significant attenuation of acoustic signals (up to 44 dB). By eliminating this layer, the system can achieve higher frequencies (e.g. up to 4 GHz or even more), allowing for resolutions of 750 nanometers in PMMA and 1.5 micrometers in silicon oxide.

In some examples, automated maintenance is facilitated through the use of acoustic measurements to detect changes in the tip-sample echo. This change can indicate wear or deformation of the probe tip, prompting maintenance actions.

In some examples, a predictive model is implemented to anticipate when maintenance actions, such as reshaping and/or recoating the tip, are necessary. This model may use data from previous scans and acoustic feedback to predict tip wear, optimizing maintenance scheduling and minimizing downtime. The predictive model may advantageously be a trained machine learning model. For example, a deep learning model may be used. However, various other machine learning techniques may be utilized.

In some examples, feedback loops are incorporated to provide real-time adjustments during maintenance operations. If deviations from expected acoustic signatures are detected, the system can make immediate adjustments to the maintenance process.

In some examples, the system automatically reshapes the probe tip by engaging with a rough patch designed to round the tip back to its optimal shape. This process can be triggered based on the predictions from the acoustic monitoring and the predictive model.

In some examples, automated maintenance includes mechanisms to handle and control debris generated during the scanning or maintenance process. This can involve using static forces, local vacuums, or specially designed surfaces to collect and contain debris away from the sample area.

In some examples, the tip of the probe is initially coated with a polymer or another soft, preferably high-attenuation material to protect it from wear and damage during use. This coating can be designed to absorb the damage that would otherwise affect the structural integrity of the tip itself.

In some examples, the coating on the tip can be abraded and reshaped using a rough patch to restore the tip to its desired shape and functionality. This allows the tip to maintain optimal performance without the need for replacement.

In some examples, the coating material is selected to be thick enough to ensure durability but thin enough not to interfere with the acoustic measurements during the scanning process.

In some examples, a new layer of coating material can be applied to the tip periodically or as needed to replace the worn-out coating. This approach could involve re-coating the tip with the same or different materials to extend its operational life.

In some examples, the rough patch used for reshaping the tip is filled with a weak polymer that abrades before the tip material. This setup can protect the tip by ensuring that the softer polymer layer wears out first, thereby preserving the integrity of the tip.

In some examples, the rough patch itself is coated with a material designed to capture debris and wear particles. This could involve a sticky or adhesive material that traps particles, preventing them from contaminating the semiconductor samples or other sensitive areas of the metrology apparatus.

In some examples, a rough patch is utilized adjacent to the scanning area to abrade the tip and collect debris by gravity, which naturally falls away from the sample.

In some examples, debris is managed by integrating a collector or wall-like structure that traps debris as the probe operates, potentially utilizing gravity and strategic positioning (e.g., turning the probe 90 degrees) to guide debris into the collector.

In some examples, a local vacuum system or suction mechanism is employed to capture debris effectively, ensuring that particles are removed from the operational area and do not contaminate the sample.

In some examples, static force is applied to ensure that debris adheres to designated collection areas, preventing it from scattering across the sample surface.

It will be appreciated that the ability to effectively detect and characterize sub-surface defects and features at nanometer-scale resolutions, particularly e.g. at depths exceeding 1 µm and/or in optically opaque materials, presents a significant technical advantage. The described ultrasound acoustic microscopy system, equipped with advanced probe tips and a high-frequency ultrasound generator, allows for relatively deep penetration into materials where optical methods cannot reach due to their opacity and/or complex internal structures. The method can for instance be used for identifying defects and inhomogeneities that could impact the performance and reliability of semiconductor devices and other materials engineered at the nano-scale.

It will be appreciated that the method may include computer implemented steps. All above mentioned steps can be computer implemented steps. Embodiments may comprise computer apparatus, wherein processes performed in computer apparatus. The invention also extends to computer programs, particularly computer programs on or in a carrier, adapted for putting the invention into practice. The program may be in the form of source or object code or in any other form suitable for use in the implementation of the processes according to the invention. The carrier may be any entity or device capable of carrying the program. For example, the carrier may comprise a storage medium, such as a ROM, for example a semiconductor ROM or hard disk. Further, the carrier may be a transmissible carrier such as an electrical or optical signal which may be conveyed via electrical or optical cable or by radio or other means, e.g. via the internet or cloud.

Some embodiments may be implemented, for example, using a machine or tangible computer-readable medium or article which may store an instruction or a set of instructions that, if executed by a machine, may cause the machine to perform a method and/or operations in accordance with the embodiments.

Various embodiments may be implemented using hardware elements, software elements, or a combination of both. Examples of hardware elements may include processors, microprocessors, circuits, application specific integrated circuits (ASIC), programmable logic devices (PLD), digital signal processors (DSP), field programmable gate array (FPGA), logic gates, registers, semiconductor device, microchips, chip sets, et cetera. Examples of software may include software components, programs, applications, computer programs, application programs, system programs, machine programs, operating system software, mobile apps, middleware, firmware, software modules, routines, subroutines, functions, computer implemented methods, procedures, software interfaces, application program interfaces (API), methods, instruction sets, computing code, computer code, et cetera.

Herein, the invention is described with reference to specific examples of embodiments of the invention. It will, however, be evident that various modifications, variations, alternatives and changes may be made therein, without departing from the essence of the invention. For the purpose of clarity and a concise description features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The term "and/or" includes any and all combinations of one or more of the associated listed items. The mere fact that certain measures are recited in mutually different claims does not indicate that a combination of these measures cannot be used to an advantage.

## Claims

1. A method for operating an ultrasound acoustic microscopy system equipped with a probe tip, wherein the probe tip is configured to be placeable in contact with a sample to emit an ultrasound acoustic signal into the sample for performing ultrasound acoustic microscopy measurement, wherein the method comprises determining information about a condition of the probe tip, and selectively conditioning the probe tip with a tip conditioning unit of the ultrasound acoustic microscopy measurement system, if the determined information about the condition of the probe tip indicates a need, to maintain or enhance a target characteristic of the probe tip, wherein the conditioning is performed selectively at one or more instances during and/or between ultrasound acoustic microscopy measurements.

2. The method of claim 1, wherein the ultrasound acoustic microscopy system is configured to be switchable between a probing state, in which the probe tip is used for sensing, and a conditioning state, in which the probe tip is reconditioned.

3. The method of claim 1 or 2, wherein the condition of the probe tip is determined based on ultrasound echo measurements.

4. The method of any one of the preceding claims, wherein the selective conditioning of the probe tip is performed at preset intervals corresponding to predetermined wear patterns of the probe tip, regardless of direct determination of the probe tip's condition at each interval.

5. The method of any one of the preceding claims, wherein the conditioning of the probe tip involves reshaping the probe tip.

6. The method of any one of the preceding claims, wherein the conditioning unit is configured to coat the probe tip with a coating layer of coating material, wherein the coating layer is configured to interface with the sample to at least partially shield the probe tip.

7. The method of claim 6, wherein the coating layer is configured to be replaceable, allowing for the removal and reapplication of a new coating layer upon wear or damage.

8. The method of claim 6 or 7, wherein the conditioning unit is configured to apply a subsequent coating to the probe tip over a previous coating layer, wherein said subsequent coating layer provides additional coating material to restore the probe tip to a desired operational condition after the previous coating layer has degraded.

9. The method of claim 6, 7 or 8, wherein the coating layer includes a gradient in thickness along the curvature of the probe tip configured to serve as an acoustic attenuation layer such as to reduce spurious echoes from sides of the probe tip during ultrasound propagation.

10. The method of any one of the preceding claims 5-9, wherein reshaping comprises abrading the probe tip, wherein the tip conditioning unit comprises an abrading surface for interacting with the probe tip.

11. The method of claim 10, wherein the abrading surface is positioned at an angle with respect to the sample, and wherein the probe tip is attached to a base that is configured to rotate to bring the probe tip into contact with the abrading surface during the conditioning state, wherein the conditioning unit is further provided with a debris collector positioned approximate to the probe tip during abrading and/or cleaning in order to collect debris dislodged from the probe tip.

12. The method of claim 10 or 11, wherein the abrading surface of the conditioning unit has a variable abrading configuration that enables a multidirectional abrasion of the probe tip as it moves in a substantially linear path.

13. The method of any one of the preceding claims 10 or 11, wherein the abrading surface of the tip conditioning unit is contoured into a concave shape.

14. The method of any one of the preceding claims, wherein information about the condition of the probe tip is determined through acoustical feedback analysis comprising determining values indicative of predetermined one or more physical characteristics of the probe tip based on variations in the detected echoes at a tip-sample interface and/or at the tip end when positioned in vacuum, gas or liquid and/or in contact with a reference surface, wherein said variations in the echoes reflect changes in shape, amplitude, or phase of the acoustic signal due to tip condition alterations, wherein conditioning parameters for restoring the probe tip are adjusted based on said determined values relative to reference values established through computational modeling.

15. An ultrasound acoustic microscopy system, comprising:
a probe tip configured to contact a sample;
an ultrasound generator configured to emit an ultrasound acoustic signal into the sample;
a detector configured to detect echoes from the sample; and
an evaluation module configured to assess the performance of the probe tip using the imaging data and/or predefined criteria to determine whether the probe tip requires conditioning;
a tip conditioning unit configured to condition the probe tip to maintain or enhance a target characteristic of the probe tip; and
a control system configured to selectively activate the tip conditioning unit to condition the probe tip at one or more instances during and/or between ultrasound acoustic measurements.
